# EUROPÄISCHE PATENTSCHRIFT

(11) **EP 2 116 697 B1**
(45) Veröffentlichungstag und Bekanntmachung des Hinweises auf die Patenterteilung: **30.05.2018**
(21) Anmeldenummer: 09004637.6
(22) Anmeldetag: 31.03.2009
(51) Int. Cl.: F01K 21/02, F01K 15/02, F01P 3/22, F02G 1/043, F01K 23/06, F01K 23/14, F01B 27/04, F02B 41/06

(54) **Antriebseinheit mit einer Brennkraftmaschine und einer regelungsfrei selbstanlaufenden Hubkolbenmaschine**
Drive unit with a fuel engine and a non-regulated self-actuating piston engine
Unité d'entraînement dotée d'un moteur à combustion et d'une machine à piston alternatif automatique sans régulation

(30) Priorität: 05.05.2008 AT 6982008
(43) Veröffentlichungstag der Anmeldung: 11.11.2009
(73) Patentinhaber: MAN Truck & Bus Österreich AG, 4400 Steyr (AT)
(72) Erfinder: Raab, Gottfried, 4320 Perg (AT); Klammer, Josef, 4400 Steyr (AT); Raup, Markus, 4800 Attnang-Puchheim (AT)
(74) Vertreter: v. Bezold & Partner Patentanwälte - PartG mbB

(56) Entgegenhaltungen:
- DE-A1-102006 028 868
- DE-C- 462 355
- GB-A- 305 018

## Beschreibung

### Technisches Gebiet

Die Erfindung betrifft eine Antriebseinheit mit einer Brennkraftmaschine, die mit einer Abtriebswelle in Wirkverbindung steht, und mit einer Hubkolbenexpansionsmaschine, die mit einer Kurbelwelle in Wirkverbindung steht, wobei die Abtriebswelle über einen Freilauf (Überholkupplung) mechanisch derart mit der Kurbelwelle verbunden ist, dass eine Drehmomentübertragung von der Kurbelwelle auf die Abtriebswelle erfolgt.

### Stand der Technik

Bei der Entwicklung bzw. Weiterentwicklung von Brennkraftmaschinen liegt in den letzten Jahren ein Hauptaugenmerk der Arbeiten einerseits auf einer Schadstoffminimierung und andererseits auf einer Effizienzsteigerung der Aggregate. In diesem Zusammenhang besteht eine Möglichkeit, die Effizienz moderner Brennkraftmaschinen zu steigern, darin, die im Bereich der jeweiligen Brennkraftmaschine anfallende Wärme optimal zu nutzen. Durch Vorsehen entsprechender Maßnahmen ist es möglich, sowohl die Baugröße der benötigten Kühlanlage zu begrenzen als auch die ansonsten lediglich an die Umgebung abgegebene Verlustwärme für weitere Anwendungen im Bereich des Kraftfahrzeugs nutzbar zu machen

Um die Motorkühlung zu verbessern, sind in den letzten Jahren Verbrennungsmotoren, insbesondere Fahrzeugmotoren, derart weiterentwickelt worden, dass die entsprechenden Systeme eine Nutzung der im Bereich des Verbrennungsmotors anfallende Wärme auf möglichst effektive Weise ermöglichen. In diesem Zusammenhang besteht einerseits die Möglichkeit, die anfallende Wärme für andere im Kraftfahrzeug vorgesehene Wärmesenken zu verwenden oder die Wärmeenergie mit Hilfe entsprechender Kreisprozesse in mechanische Energie, insbesondere Bewegungsenergie umzuwandeln.

In diesem Zusammenhang ist aus der DE 10 2006 028 868 A1 eine Antriebseinheit bekannt, bei der eine Brennkraftmaschine mechanisch mit einer Kolbenmaschine gekoppelt ist. Bei der beschriebenen technischen Lösung wird in einem separaten Arbeitskreis ein Fluid mit Hilfe der Abwärme der Verbrennungskraftmaschine verdampft und der so erzeugte Dampf in die Zylinder der Kolbenmaschine geleitet, um die darin beweglich gelagerten Kolben in Bewegung zu versetzen. Auf diese Weise wird eine Kurbelwelle der Kolbenmaschine in Bewegung versetzt, die mechanisch mit der Kurbelwelle der Brennkraftmaschine verbunden ist.

Mit dem beschriebenen System ist es somit möglich, die Abwärme der Brennkraftmaschine zu nutzen, um mittels der Kolbenmaschine ein Drehmoment auf die Kurbelwelle der Brennkraftmaschine zu übertragen.

Entsprechend bekannter Konstruktionsprinzipien sind nunmehr grundsätzlich zwei technische Lösungen denkbar, um in den Warmlaufphasen des Wärmerückgewinnungssystems sicherzustellen, dass der Expander, insbesondere die Kolbenmaschine, nicht eine zusätzliche Last darstellt, die mitbewegt werden muss:
Durch die kurzen Einlasszeiten beim Befüllen der Zylinder ist, abhängig von den genauen Steuerzeiten, erst ab einer Zylinderzahl von 7 bis 8 gewährleistet, dass immer ein Einlassventil geöffnet ist und der Expander bei Verfügbarkeit von Dampf selbst anläuft. In diesem Fall ist die Kurbelwelle des selbstanlaufenden Expanders über einen Freilauf (Überholkupplung) mit der Kurbelwelle der Brennkraftmaschine verbunden. Dieser Freilauf stellt sicher, dass eine Drehmomentübertragung ausschließlich von der Kurbelwelle des Expanders auf die Kurbelwelle der Brennkraftmaschine erfolgt. Erst wenn ausreichend Dampf aus dem Wärmerückgewinnungssystem den Zylindern zur Verfügung gestellt wird, leistet der Expander Arbeit, so dass eine Drehmomentübertragung auf die Kurbelwelle der Brennkraftmaschine erfolgt.

Bei zusätzlich zu einer Brennkraftmaschine vorgesehenen Expandern, die aufgrund einer geringen Zylinderzahl nicht selbst anlaufend sind, ist an Stelle der Verbindung zwischen Kurbelwelle des Expanders und Kurbelwelle der Brennkraftmaschine mittels eines Freilaufs eine entsprechende Kupplung vorgesehen. Über eine Sensorik wird die Verfügbarkeit von Dampf aus dem Wärmerückgewinnungskreislauf detektiert und die Kupplung zwischen den beiden Kurbelwellen geschlossen und somit der Expander von der Brennkraftmaschine angeschleppt, bis sich ein Einlassventil des Expanders öffnet und der Expander anfährt.

Ausgehend von dem vorgenannten Stand der Technik und den bekannten Konstruktionsprinzipien für einen Anlauf einer Hubkolbenexpansionsmaschine in der Startphase liegt der Erfindung die Aufgabe zugrunde, eine Antriebseinheit sowie ein Verfahren zu deren Betrieb anzugeben, so dass ein regelungsfreier Selbstanlauf der Hubkolbenexpansionsmaschine mit verhältnismäßig geringem konstruktivem und regelungstechnischem Aufwand realisiert wird. Insbesondere soll es einerseits möglich sein, als Expander eine Kolbenmaschine mit einer geringen Anzahl von Zylindern einzusetzen und andererseits auf die Verwendung einer Kupplung zwischen den Kurbelwellen des Expanders sowie der Brennkraftmaschine zu verzichten. Auf diese Weise soll eine technische Lösung geschaffen werden, die die Abwärmenutzung einer Brennkraftmaschine mit Hilfe eines Dampfkreisprozesses ohne zusätzliche Kosten, Bauraum und ohne einen erhöhten Regelungsaufwand ermöglicht.

Hierbei soll der Betrieb eines dampf- und/oder gasbetriebenen Expanders, der mechanisch an die Kurbelwelle einer Brennkraftmaschine gekoppelt ist, gewährleistet werden, ohne dass eine Vielzahl von Schaltvorgängen einer Kupplung, bedingt durch Ein- und Auskuppeln bei jedem Bremsvorgang und jeder Null-Moment-Anforderung, nötig wird. Die erfindungsgemäße technische Lösung soll vor allem sicherstellen, dass auf einfache Weise eine Effizienzsteigerung beim Betrieb eines Kraftfahrzeugmotors, vorzugsweise eines Nutzfahrzeugdieselmotors, erzielt wird.

Die zuvor beschriebene Aufgabe wird mit Hilfe einer Antriebseinheit gemäß Anspruch 1 sowie einem Verfahren nach Anspruch 8 gelöst. Vorteilhafte Ausführungsformen der Erfindung sind Gegenstand der abhängigen Ansprüche und werden in der folgenden Beschreibung unter Bezugnahme auf die Figuren näher erläutert.

Eine erfindungsgemäß ausgeführte Antriebseinheit verfügt über eine Brennkraftmaschine, die mit einer Abtriebswelle in Verbindung steht und über eine Hubkolbenexpansionsmaschine, die mit einer Kurbelwelle in Wirkverbindung steht, wobei die Abtriebswelle über einen Freilauf mechanisch derart mit der Kurbelwelle verbunden ist, dass eine Drehmomentübertragung von der Kurbelwelle auf die Abtriebswelle erfolgt. Die erfindungsgemäße Antriebseinheit zeichnet sich dadurch aus, dass die Hubkolbenexpansionsmaschine über wenigstens zwei Zylinder verfügt, in deren Innenräume über ein Einlassventil und ein parallel dazu angeordnetes Bypassventil zumindest zeitweise ein Fluid aus einer Fluidversorgung einleitbar ist. Bei der Fluidversorgung kann es sich hierbei um jeden Bereich innerhalb oder außerhalb der Expansionsmaschine handeln, in dem ein zumindest teilweise dampfförmiges Fluid gefördert wird. Zusätzlich zum Einlass- sowie dem Bypassventil verfügt ein Zylinder einer Hubkolbenexpansionsmaschine auch über zumindest ein Auslassventil, durch das das im Innenraum des Zylinders entspannte dampf- und/oder gasförmige Fluid in eine Fluidentsorgung leitbar ist.

Die Erfindung zeichnet sich somit dadurch aus, dass im Bereich des Zylinderkopfes zusätzlich zu dem Einlassventil ein Bypassventil vorgesehen ist, durch das ein Fluid aus der Fluidversorgung in den Zylinderinnenraum leitbar ist. Eine derartige Lösung stellt sicher, dass auch bei geschlossenem Einlassventil und gleichzeitigem Überschreiten eines bestimmten Grenzwertes für den Systemdruck innerhalb der Fluidversorgung ein Fluid, vorzugsweise ein dampf- und/oder gasförmiges Fluid, in zumindest einen Zylinderinnenraum geleitet werden kann.

Das auf diese Weise vorgesehene Bypassventil in einem Zylinderkopf einer Kolbenexpansionsmaschine, insbesondere einer Hubkolbenexpansionsmaschine, verbindet die Vorteile eines geringen Bauteilaufwandes mit den Vorteilen des selbstregelnden Freilaufs. Selbst wenn alle Einlassventile bei stehender Kolbenexpansionsmaschine geschlossen sind, kann, nachdem ausreichend Verlustwärme der Brennkraftmaschine zur Verfügung steht, ein dampf- und/oder gasförmiges Fluid über das Bypassventil in die Zylinderinnenräume einströmen. Dies führt schließlich zumindest in einem Zylinder dazu, dass der Kolben in eine Abwärtsbewegung in Richtung auf den unteren Totpunkt versetzt und aufgrund dieser Bewegung in wenigstens einem anderen Zylinder ein Einlassventil geöffnet wird. Durch diese Öffnung des Einlassventils strömt dampf- und oder gasförmiges Fluid in den weiteren Zylinder und die Hubkolbenmaschine beginnt zu laufen, ohne dass eine Kupplung benötigt wird oder die Kolbenmaschine von der Brennkraftmaschine angeschleppt werden müsste. Das sichere Öffnen des Einlassventils eines Zylinders durch die Bewegung eines anderen Zylinders in Richtung des unteren Totpunktes wird vorzugsweise durch eine geeignete geometrische Auslegung des Kurbeltriebes erreicht. Bevorzugte Maßnahmen, die ergriffen werden können, um eine geeignete geometrische Auslegungen des Kurbeltriebs zu erreichen, stellen eine entsprechende Festlegung des Zylinderversatzes und/oder des Zylinderwinkels dar.

In einer vorteilhaften Ausführungsform der Erfindung stehen die Einlassventile mit der Kurbelwelle der Kolbenexpansionsmaschine derart in Wirkverbindung, dass durch die Rotation der Kurbelwelle ein Öffnen sowie Schließen der Einlassventile bewirkt wird. Vorzugsweise verfügt die Abtriebswelle über asymmetrisch zu ihrer Längsmittenachse angeordnete Nocken, die einen Ventilstößel des Einlassventils berühren, so dass bei einer Bewegung der Nocken entlang einer Kreisbahn um die Längsmittenachse die Einlassventile in eine Linearbewegung entlang ihrer Führung versetzt werden und so ein Öffnen sowie Schließen der Einlassventile erfolgt.

Während des Betriebs einer erfindungsgemäß ausgeführten Hubkolbenexpansionsmaschine, wenn also nach einem erfolgten Startvorgang ausreichend dampf- und/oder gasförmiges Fluid unter dem erforderlichen Druck in der Fluidversorgung vorhanden ist, strömt das Fluid im Wesentlichen durch das Einlassventil in den Zylinder ein, bewegt dort den beweglich gelagerten Kolben in Richtung auf den unteren Totpunkt, so dass im Zylinder eine Entspannung des Fluids stattfindet, woraufhin abschließend das entspannte Fluid aufgrund der Aufwärtsbewegung des Kolbens in Richtung auf den oberen Totpunkt durch das Auslassventil ausgeschoben wird.

Die Bewegung des Kolbens der Hubkolbenexpansionsmaschine wird auf die Kurbelwelle übertragen, die wiederum mechanisch an die Abtriebswelle, also auch eine Kurbelwelle der Brennkraftmaschine, gekoppelt ist. Zwischen der Kurbelwelle der Hubkolbenexpansionsmaschine und der Abtriebswelle der Brennkraftmaschine ist ein Freilauf, auch als Überholkupplung bezeichnet, vorgesehen, der sicherstellt, dass eine Drehmomentübertragung ausschließlich von der Kurbelwelle der Hubkolbenexpansionsmaschine auf die Abtriebswelle der Brennkraftmaschine erfolgt. Sofern innerhalb der Fluidversorgung keine für einen Antrieb der Hubkolbenexpansionsmaschine ausreichende Menge Dampf zur Verfügung steht, beispielsweise in einer Warmlaufphase der Antriebseinheit, dreht sich die Abtriebswelle der Brennkraftmaschine schneller als die Kurbelwelle der Hubkolbenexpansionsmaschine, ohne dass die Brennkraftmaschine die Kolbenmaschine "mitschleppen" muss.

Mit einer erfindungsgemäß ausgeführten Antriebseinheit ist sichergestellt, dass nach Abschluss einer Warmlaufphase der Brennkraftmaschine, also dann, wenn eine ausreichende Menge eines dampf- und/oder gasförmigen Fluids innerhalb der Fluidversorgung vorhanden ist, die Hubkolbenexpansionsmaschine anlaufen kann, obwohl sämtliche Einlassventile geschlossen sind. Sofern alle Einlassventile der Hubkolbenexpansionsmaschine geschlossen sind, können sich die wenigstens zwei Zylinder jeweils entweder in einer Expansions- oder der Ausschubphase befinden. Aus diesem Grund sollte sicher gestellt sein, dass die Hubkolbenexpansionsmaschine in jedem Fall bei einem Übergang vom Stillstand in eine Bewegung in die richtige Richtung zu laufen beginnt.

Die erfindungsgemäße Ausführung der Hubkolbenexpansionsmaschine gewährleistet ein sicheres Anlaufen der Expansionsmaschine in die richtige Richtung nach Abschluss der Warmlaufphase der Brennkraftmaschine mit einfachen Mitteln. Nach Abschluss der Warmlaufphase der Brennkraftmaschine wird mittels einer Wärmeübertragereinheit einem Kühlkreislauf der Brennkraftmaschine Wärme entzogen und der Fluidversorgung der Hubkolbenexpansionsmaschine zugeführt. In der Fluidversorgung der Hubkolbenexpansionsmaschine bildet sich ein dampf- und/oder gasförmiges Fluid, das mit Hilfe wenigstens einer Fördereinheit in Richtung auf ein Einlassventil sowie ein parallel dazu angeordnetes Bypassventil gefördert wird. Mit Hilfe der Fördereinheit wird der Systemdruck in der Fluidversorgung zunächst erhöht, so dass sich das wenigstens eine, vorzugsweise federbelastete Bypassventil bei einem Grenzwert des Systemdrucks öffnet und Fluid in den Innenraum des wenigstens einen Zylinders einströmt.

Der Öffnungsdruck des Bypassventils ist derart gewählt, dass er zwar oberhalb des Betriebsdrucks der Hubkolbenexpansionsmaschine, aber unterhalb des zulässigen Systemdrucks der Fluidversorgung liegt. Hierbei ist der Öffnungsquerschnitt des Bypassventils gegenüber dem Öffnungsquerschnitt des Einlassventils derart klein gewählt, dass sich trotz der Öffnung des Bypassventils der Systemdruck zunächst innerhalb der Fluidversorgung weiter erhöht. Bei einer speziellen Weiterbildung der Erfindung wird auf diese Weise sichergestellt, dass aufgrund der beschriebenen weiteren Erhöhung des Systemdrucks innerhalb der Fluidversorgung nach einer ersten Öffnung eines Bypassventils auch das zumindest eine weitere Bypassventil des zumindest einen weiteren Zylinders geöffnet wird, bevor es zu einer Bewegung eines ersten Einlassventils kommt. So können vor allem toleranzbedingte Unterschiede hinsichtlich des für die wenigstens zwei federbelasteten Bypassventile jeweils benötigten Öffnungsdrucks ausgeglichen werden.

In jedem Fall strömt in der Startphase komprimiertes dampf- und/oder gasförmiges Fluid durch das wenigstens eine Bypassventil in den Innenraum wenigstens eines Zylinders der Hubkolbenexpansionsmaschine, bevor es zu einer Bewegung eines der Einlassventile kommt. Befindet sich der Kolben des jeweiligen Zylinders in der Ausschubphase, ist das diesem Zylinder zugeordnete Einlassventil geschlossen, während ein ebenfalls vorgesehenes Auslassventil geöffnet ist. Aufgrund dieser Konstellation baut sich trotz des Einströmens des dampf- und/oder gasförmigen Fluids im Zylinder kein Druck auf, da das über das Bypassventil einströmende Fluid über das Auslassventil wieder aus dem Zylinder ausströmt. Durch diese Maßnahme wird auf bevorzugte Weise sichergestellt, dass der Kolben aufgrund des durch das Bypassventil einströmenden Fluids nicht in die falsche Richtung bewegt wird bzw. sich die Kurbelwelle der Kolbenexpansionsmaschine nicht in die falsche Richtung dreht.

Befindet sich der Kolben des Zylinders dagegen in der Expansionsphase sind sowohl das Einlass- als auch das Auslassventil geschlossen. Strömt nunmehr komprimiertes dampf- und/oder gasförmiges Fluid durch das Bypassventil in den Innenraum des Zylinders ein, findet ein Druckaufbau innerhalb des Zylinders statt, so dass sich der Kolben schließlich in Richtung auf den unteren Totpunkt zubewegt. Durch die so bewirkte Bewegung des Kolbens wird die Kurbelwelle der Hubkolbenexpansionsmaschine in eine Rotationsbewegung versetzt, so dass auch zumindest ein weiterer Kolben des wenigstens einen weiteren Zylinders eine Linearbewegung ausführt. Durch die Bewegung der Kurbelwelle wird schließlich zumindest ein einem weiteren Zylinder zugeordnetes Einlassventil geöffnet und dampf- und/oder gasförmiges Fluid strömt in den Innenraum dieses Zylinders ein, so dass die Hubkolbenexpansionsmaschine schließlich anläuft. Nachdem der Anlauf der Hubkolbenexpansionsmaschine erfolgt ist, fällt der Systemdruck innerhalb der Fluidversorgung auf den Arbeitsdruck der Hubkolbenexpansionsmaschine ab, so dass die Bypassventille während des Normalbetriebs der Hubkolbenexpansionsmaschine ohne Funktion sind.

Eine weitere bevorzugte Ausführungsform sieht vor, dass eine erfindungsgemäß ausgeführte Hubkolbenexpansionsmaschine über eine ungerade Anzahl von Zylindern verfügt. Ganz besonders geeignet ist hierbei die Verwendung von fünf Zylindern.

In einer speziellen Weiterbildung der Erfindung ist das Bypassventil derart ausgeführt, dass der vom Bypassventil freigebbare Öffnungsquerschnitt das 0,1-fache bis 0,5-fache, ganz besonders bevorzugt das 0,2-fache eines vom Einlassventil freigebbaren Öffnungsquerschnittes beträgt. Eine derartige Dimensionierung des Öffnungsquerschnittes des Bypassventils stellt auf bevorzugte Weise sicher, dass trotz toleranzbedingter Ungleichheiten zwischen den einzelnen Bypassventilen der Systemdruck innerhalb der Fluidversorgung auch nach Öffnung eines Bypassventils ansteigt und erst nachdem alle in der Hubkolbenexpansionsmaschine vorgesehenen Bypassventile geöffnet sind aufgrund der Bewegung wenigstens eines Kolbens beziehungsweise der Kurbelwelle ein Einlassventil bewegt wird.

Im Übrigen betrifft die Erfindung ein Verfahren zum Betrieb einer Antriebseinheit, bei der Abtriebswelle einer Brennkraftmaschine über einen Freilauf mechanisch mit der Kurbelwelle einer Hubkolbenexpansionsmaschine, die über wenigstens zwei Zylinder verfügt, verbunden ist, wobei mittels Abwärme der Brennkraftmaschine ein Fluid erwärmt und zumindest teilweise in eine dampf- und/oder gasförmige Phase überführt wird. Das Fluid wird in zumindest teilweise dampf- und/oder gasförmigem Zustand über ein Einlassventil in einen Innenraum des Zylinders eingeleitet und unter Entspannung des Fluids wird ein innerhalb des Zylinders beweglich gelagerter und mechanisch an die Kurbelwelle gekoppelter Kolben in Bewegung gesetzt. Das erfindungsgemäße Verfahren zeichnet sich dadurch aus, dass ein strömungstechnisch parallel zum Einlassventil angeordnetes Bypassventil geöffnet und somit ein Durchlass in den Innenraum des Zylinders geöffnet wird, auch wenn das Einlassventil geschlossen ist.

Eine vorteilhafte Weiterbildung der Erfindung sieht vor, dass in einer Hubkolbenexpansionsmaschine wenigstens zwei Zylinder mit jeweils einem Einlass- und einem Bypassventil vorgesehen sind und alle Bypassventile geöffnet werden bevor ein Einlassventil geöffnet wird.

Das erfindungsgemäße Verfahren stellt somit genauso wie die entsprechende Antriebseinheit eine technische Lösung dar, die den regelungsfreien Selbstanlauf einer Hubkolbenexpansionsmaschine auch mit einer geringen Anzahl von Zylindern ermöglicht, ohne dass eine Kupplung benötigt wird, um die Kurbelwelle der Hubkolbenexpansionsmaschine mechanisch mit der Abtriebswelle der Brennkraftmaschine zu verbinden.

Im Folgenden wird die Erfindung ohne Beschränkung des allgemeinen Erfindungsgedankens unter Bezugnahme auf die Figuren anhand von Ausführungsbeispielen näher erläutert. Es zeigen:
- Fig. 1: Zylinder einer Hubkolbenexpansionsmaschine mit Einlass- und Auslassventil sowie einem Bypassventil;
- Fig. 2: Ausschnitt eines Zylinderkopfs einer Hubkolbenexpansionsmaschine mit Einlassventil und parallel dazu angeordnetem Bypassventil in Detailansicht;
- Fig. 3: Darstellung des Dampfflusses bei Anlauf aus der Einlassphase;
- Fig. 4: Darstellung des Dampfflusses bei Anlauf aus der Expansionsphase;
- Fig. 5:: Darstellung des Dampfflusses bei Anlauf aus der Ausschubphase;
- Fig. 6:: Darstellung der Kopplung einer erfindungsgemäß ausgeführten Hubkolbenmaschine mit einer Brennkraftmaschine

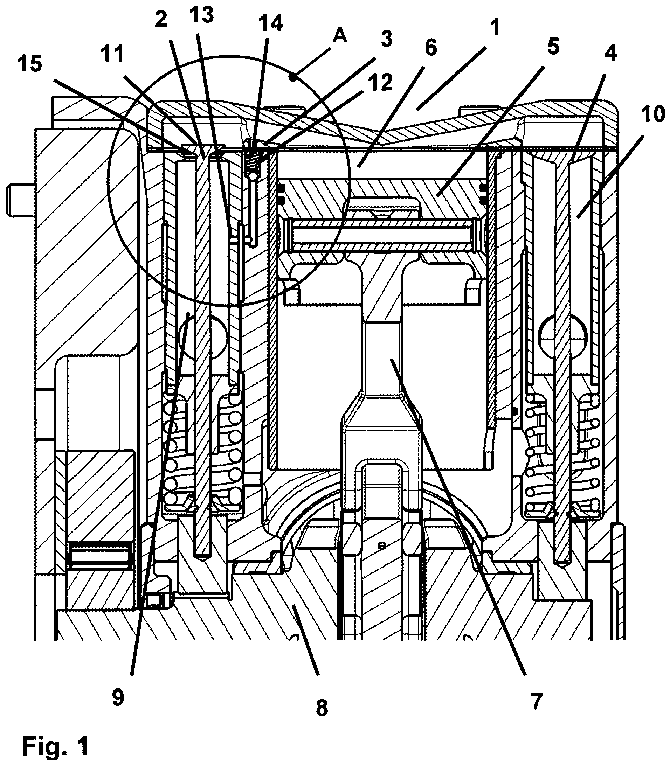

Figur 1 zeigt einen Zylinder 1 einer erfindungsgemäß ausgeführten Hubkolbenexpansionsmaschine mit Einlass- 2 und Auslassventil 4 sowie einem Bypassventil 3 in einer Schnittdarstellung. Die Hubkolbenexpansionsmaschine ist über einen Freilauf 17 (Überholkupplung) mechanisch an die Abtriebswelle des Dieselmotors eines Nutzfahrzeugs gekoppelt. Sobald der Dieselmotor nach einer Startphase Verlustwärme bereitstellt, findet in einem Wärmeübertrager ein zumindest teilweiser Phasenübergang eines fluidischen Arbeitsmediums statt. Das zumindest teilweise dampfförmige Fluid wird mit Hilfe einer Pumpe über die Fluidversorgung 9 zu den Einlassventilen 2 und den Bypassventilen 3 gefördert.

Auf der Auslassseite des in Figur 1 dargestellten Zylinders befindet sich das Auslassventil 4, das während der Ausschubphase des Kolbens 5 geöffnet wird, damit das entspannte Fluid aus dem Zylinderinnenraum 6 in die Fluidentsorgung 10 ausgeschoben werden kann.

Der Kolben 5 des Zylinders 1 ist über eine Pleuelstange 7 mit entsprechenden Lagern mit einer Kurbelwelle 8 der Hubkolbenexpansionsmaschine verbunden. Durch eine Linearbewegung des Kolbens 5 innerhalb des Zylinderinnenraums 6 wird die Kurbelwelle 8 der Hubkolbenexpansionsmaschine in eine Rotationsbewegung versetzt. Die Kurbelwelle 8 ist derart ausgeführt, dass in Abhängigkeit der Bewegung der Kurbelwelle 8 das Öffnen und Schließen der Einlass- 2 und Auslassventile 4 erfolgt, indem die Ventilstößel 11 der Einlass- 2 und Auslassventile 4 in eine Auf- und Abbewegung versetzt werden. Da ferner zusätzlich zu dem dargestellten Kolben 5 wenigstens ein weiterer Kolben der Hubkolbenexpansionsmaschine mechanisch an die Kurbelwelle 8 gekoppelt ist, werden mit einer Bewegung der Kurbelwelle 8 auch die diesen weiteren Zylindern zugeordneten Einlass- und Auslassventile bewegt. Um ein Anlaufen der Hubkolbenexpansionsmaschine zu gewährleisten, muss daher wenigstens einer der Kolben 8 dieser Maschine in Bewegung versetzt werden.

Innerhalb der Fluidversorgung 9 der wenigstens zwei Zylinder 1 befindet sich nach Abschluss einer Warmlaufphase ein dampfförmiges Fluid, das mit Hilfe einer Pumpe zu den Einlassventilen 2 und den Bypassventilen 3 gefördert wird. Sobald sich innerhalb der Fluidversorgung 9 ein Systemdruck einstellt und eine Kraft auf das Bypassventil 3 ausübt, die von der Feder 12 auf das Bypassventil 3 ausgeübte Kraft übersteigt, wird das Bypassventil 3 unabhängig von der Stellung der übrigen Ventile geöffnet und dampfförmiges Fluid strömt in den Innenraum 6 des Zylinders 1.

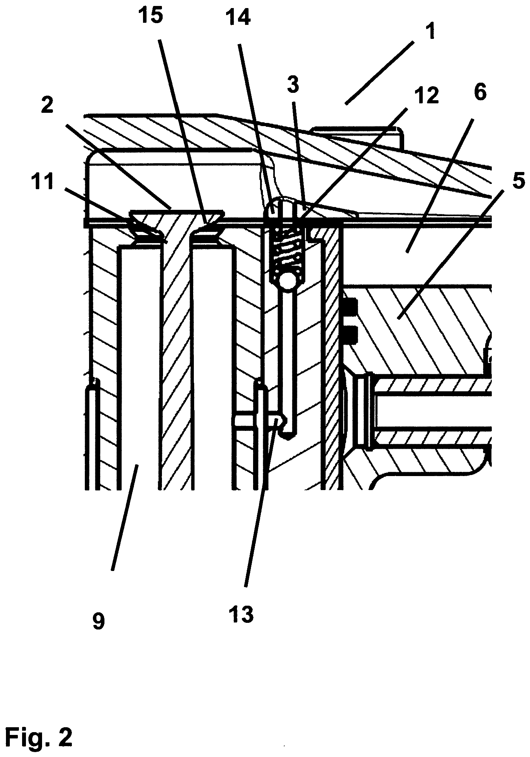

In Fig. 2 ist die Detailansicht des in Fig. 1 dargestellten Bereichs "A" zu sehen. Es ist somit ein Ausschnitt eines erfindungsgemäß ausgeführten Zylinderkopfes dargestellt, der die Anordnung eines Einlassventils 2 und eine mögliche Ausführung eines Bypassventils 3 zeigt. Im Bereich des Ventilstößels 11 des Einlassventils 2 befindet sich eine Bohrung 13, die eine Strömungsverbindung zwischen der Fluidversorgung 9 und dem Bypassventil 3 bzw. der durch das Bypassventil freigebbaren Ventilöffnung herstellt. Wird durch den in der Fluidversorgung 9 herrschenden Systemdruck auf das Bypassventil 3 eine Kraft ausgeübt, die größer als die Federkraft der Feder 12 ist, wird das als Kugelventil ausgeführte Bypassventil 3 geöffnet und das dampfförmige Fluid, strömt aus dem Bereich der Fluidversorgung 9 in den Zylinderinnenraum 6.

Sobald durch das Einströmen des Fluids im Zylinderinnenraum 6 der Arbeitsdruck erreicht wird, bewegt sich der Kolben 5 nach unten in Richtung auf den unteren Totpunkt, und setzt, wie in Zusammenhang mit Fig. 1 bereits beschrieben, die Kurbelwelle in Bewegung, so dass ein Einlassventil eines weiteren Zylinders geöffnet wird und die Hubkolbenexpansionsmaschine anläuft.

Wie der Fig. 2 deutlich zu entnehmen ist, ist der Öffnungsquerschnitt 14 des Bypassventils 3 deutlich kleiner als der Öffnungsquerschnitt 15 des Einlassventils 2. Der Öffnungsquerschnitt 15 des Einlassventils 2 ist in dem in Fig. 2 dargestellten Ausführungsbeispiel etwa fünfmal größer als der Öffnungsquerschnitt 14 des Bypassventils 3. Durch eine derartige Dimensionierung des Öffnungsquerschnitts 14 des Bypassventils 3 wird sichergestellt, dass der Systemdruck innerhalb der Fluidversorgung 9 auch dann weiter ansteigt, wenn das Bypassventil 3 bereits geöffnet ist. Die weitere Steigerung des Systemdrucks ist in diesem Fall darauf zurückzuführen, dass der Strömungswiderstand eines derart klein dimensionierten Öffnungsquerschnittes 14 im Vergleich zu der durch die Fördereinheit der Fluidversorgung 9 geförderten Dampfmenge verhältnismäßig groß ist.

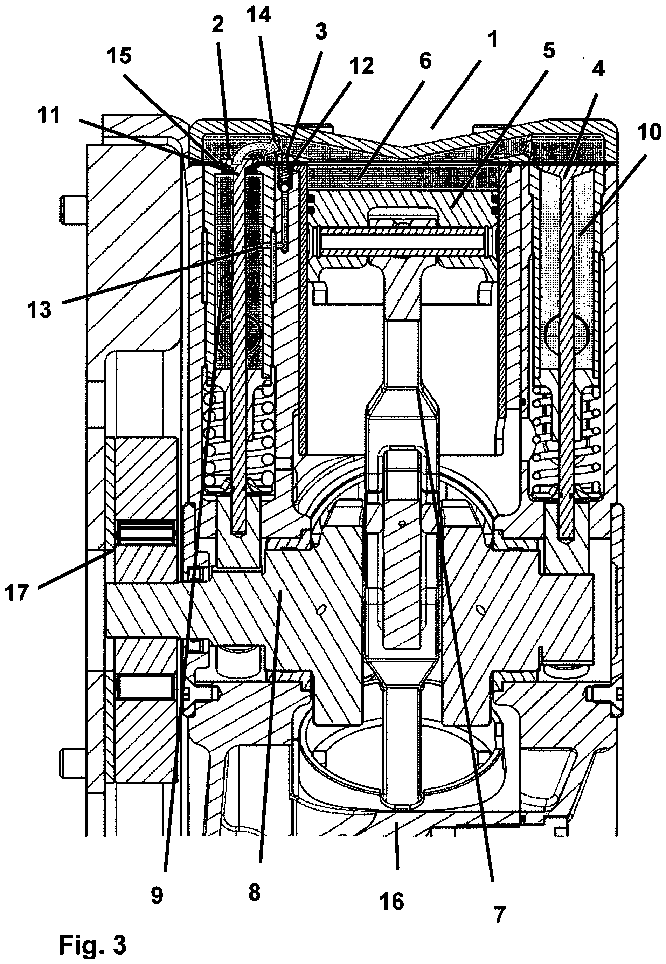

Fig. 3 zeigt die Ventilstellung des Einlass- 2 und Auslassventils 4 sowie des Bypassventils 3 eines Zylinders 1 während der Einlassphase sowie den Dampffluss beim Anlauf aus der Expansionsphase. Das Einlassventil 2 ist geöffnet, so dass Dampf aus der Fluidversorgung 9 in den Innenraum 6 des Zylinders 1 eintritt. Dadurch bewegt sich der Kolben 5 in einer Linearbewegung nach unten in Richtung auf den unteren Totpunkt. Da eine derartige Bewegung des Kolbens 5 bei abermals geschlossenem Einlassventil 2 zu einer Volumenvergrößerung im Zylinderinnenraum führt, wird der im Zylinderinnenraum 6 befindliche Dampf durch die Abwärtsbewegung des Kolbens 5 entspannt. Durch die Bewegung des Kolbens 5 werden die Kurbelwelle 8, die Ventilstößel 11 sowie wenigstens ein weiterer Kolben 16 mit den dazugehörigen Einlass- und Auslassventilen in Bewegung versetzt. In dem in Fig. 3 dargestellten Betriebszustand des Zylinders 1 ist das Bypassventil 3 ohne Funktion.

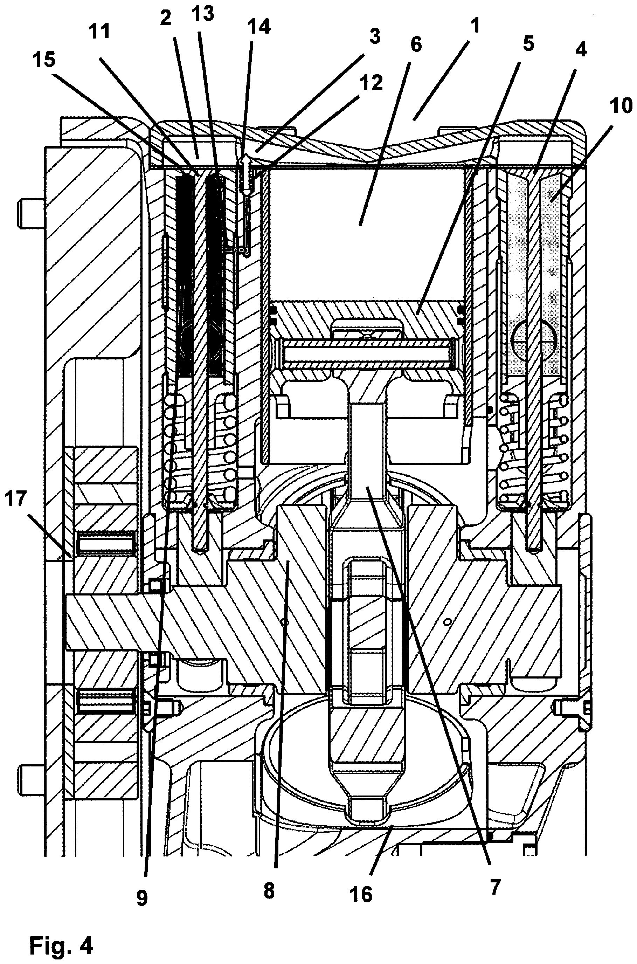

Fig. 4 zeigt eine Darstellung des Dampfflusses in der Expansionsphase eines Zylinders 1 mit der dazugehörigen Stellung des Kolbens 5. Nach Abschluss der Warmlaufphase der Brennkraftmaschine steht ausreichend Abwärme zur Verfügung, um innerhalb der Fluidversorgung 9 einen Dampf zu erzeugen. Dieser Dampf wird mit Hilfe einer Fördereinheit innerhalb der Fluidversorgung 9 umgewälzt. Bei Erreichen eines vorgebbaren Systemdrucks innerhalb der Fluidversorgung 9, der bewirkt, dass auf das Bypassventil 3 eine Kraft ausgeübt wird, die die ebenfalls wirkende Federkraft der Feder 12 übersteigt, wird das Bypassventil 3 geöffnet und Dampf strömt aus der Fluidversorgung 9 in den Innenraum 6 des Zylinders 1 ein.

Durch das Einströmen des Dampfes gegen die geschlossenen Einlass- 2 und Auslassventile 4 wird der Druck innerhalb des Zylinders 1 erhöht. Durch diesen Druckaufbau beginnt sich der Kolben 5 langsam in Richtung auf den unteren Totpunkt zu bewegen und versetzt die daran gekoppelte Kurbelwelle 8 in eine Rotationsbewegung. Da die Kurbelwelle derart ausgeführt ist, dass sie eine Bewegung der Einlass- 2 und Auslassventile 4 bewirkt, wird in einem weiteren Zylinder 16 das zugehörige Einlassventil durch die Bewegung des Kolbens beziehungsweise der daran angekoppelten Kurbelwelle 8 geöffnet. Aufgrund dieser Öffnung des Einlassventils eines weiteren, in Fig. 4 nicht dargestellten Einlassventils, beginnt die Hubkolbenexpansionsmaschine zu laufen. Während der Betriebsphase ist das Bypassventil 3 erneut ohne Funktion.

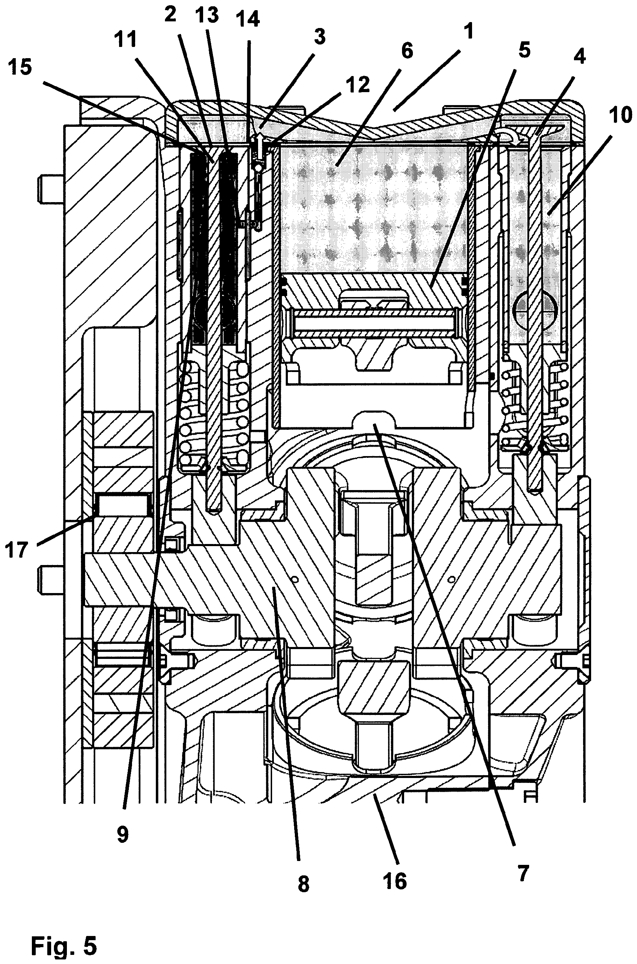

Fig. 5 zeigt den Dampffluss für einen selbstständigen Anlauf einer Hubkolbenexpansionsmaschine, die im Arbeitszyklus der Ausschubphase steht. Das Einlassventil 2 ist geschlossen während das Auslassventil 4 geöffnet ist. Durch das aufgrund des systemdrucks in der Fluidversorgung 9 geöffnete Bypassventil 3 strömt erneut Dampf aus der Fluidversorgung 9 in den Zylinderinnenraum 6 ein. Wegen der geöffneten Stellung des Auslassventils 4 baut sich allerdings innerhalb des Zylinderinnenraums 6 kein Druck auf, so dass der Kolben 5 nicht in eine Bewegung versetzt wird. Durch diese technische Maßnahme wird insbesondere sichergestellt, dass sich der Kolben 5 nicht in die falsche Richtung bewegt und somit die Kurbelwelle 8 nicht in die falsche Richtung gedreht wird. Ein Anlaufen der Hubkolbenexpansionsmaschine in eine hierfür nicht vorgesehene Richtung wird somit auf einfache Weise wirksam vermieden.

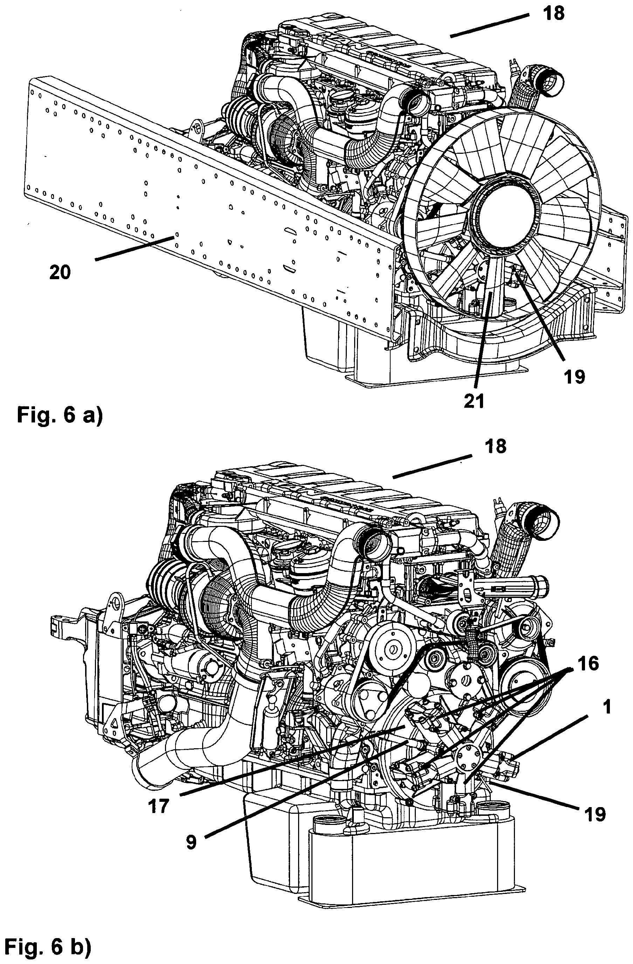

Fig. 6 zeigt eine bevorzugte Anordnung bzw. Kopplung einer erfindungsgemäß ausgeführten Hubkolbenexpansionsmaschine 19 mit einer Brennkraftmaschine 18, wobei Fig. 6 a) eine Darstellung der Einbausituation zwischen den Rahmenlängsträgern 20 mit dem Lüfterrad 21 enthält, während in Fig. 6 b) aus Gründen der besseren Übersichtlichkeit auf die Darstellung des Lüfterrades 21 und der Rahmenlängsträger 20 verzichtet worden ist.

Die fünf Zylinder 1, 16 aufweisende Hubkolbenexpansionsmaschine 19 ist in diesem Fall in Art eines Sternmotors ausgeführt, der zwischen dem Lüfterrad 21 und der Brennkraftmaschine 18 angeordnet ist. Die Hubkolbenexpansionsmaschine 19 verfügt über eine Kurbelwelle 8 (in dieser Ansicht verdeckt), die über einen Freilauf 17 (Überholkupplung) an die Kurbelwelle der Brennkraftmaschine 18 gekoppelt ist. Der Freilauf 17 gewährleistet, dass eine Drehmomentübertragung ausschließlich von der Kurbelwelle 8 der Hubkolbenexpansionsmaschine auf die Kurbelwelle der Brennkraftmaschine 18 und nicht in umgekehrter Richtung erfolgt. Auf diese Weise wird einerseits sichergestellt, dass eine Drehmomentübertragung von der Kurbelwelle 8 der Hubkolbenexpansionsmaschine auf die Kurbelwelle der Brennkraftmaschine immer dann erfolgt, wenn ausreichend Dampf für den Betrieb der Hubkolbenexpansionsmaschine 19 zur Unterstützung der Brennkraftmaschine 18 vorhanden ist und andererseits, dass kein Betriebszustand auftreten kann, in dem die Brennkraftmaschine 18 die Hubkolbenexpansionsmaschine 19 antreibt (sog. Mitschleppen).

Wie die obigen Ausführungen zeigen, stellt das Vorsehen eines Bypassventils 3, das, wie beschrieben, parallel zum Einlassventil 2 eines Zylinders 1 vorgesehen ist, eine einfache und wirksame Möglichkeit dar, den Selbstanlauf einer Hubkolbenexpansionsmaschine, die mechanisch an eine Brennkraftmaschine gekoppelt ist, zu verwirklichen. Mit Hilfe der Erfindung ist es somit auf besonders bevorzugte Weise möglich, die Abwärme eines Verbrennungsmotors, insbesondere eines Nutzfahrzeugverbrennungsmotors mit Hilfe eines Sekundärwärmekreislaufes zu verwirklichen. Hierbei wird in dem Sekundärwärmekreislauf ein bei Normalbedingungen vorzugsweise flüssiges Arbeitsmittel in eine zumindest teilweise Dampfphase überführt und der so erzeugte Dampf mittels einer Hubkolbenexpansionsmaschine entspannt, um die in Abwärme der Brennkraftmaschine enthaltene Energie in Bewegungsenergie zu wandeln. Die auf diese Weise "rückgewonnene" Bewegungsenergie, die der Antriebseinheit zugeführt wird, sorgt letztendlich für eine Steigerung der Effizienz des Gesamtsystems. Derart kombinierte Systeme aus einer herkömmlichen Brennkraftmaschine, insbesondere einem Dieselmotor, und einer dampfbetriebenen Hubkolbenexpansionsmaschine dienen somit direkt der Wirkungsgradsteigung einer Antriebseinheit und führen somit zu einer Verringerung der Schadstoffemission und einer Steigerung der Wirtschaftlichkeit.

### Bezugszeichenliste

- 1: Zylinder
- 2: Einlassventil
- 3: Bypassventil
- 4: Auslassventil
- 5: Kolben
- 6: Zylinderinnenraum
- 7: Pleuelstange
- 8: Kurbelwelle
- 9: Fluidversorgung
- 10: Fluidentsorgung
- 11: Ventilstößel
- 12: Feder
- 13: Bohrung
- 14: Öffnungsquerschnitt Bypassventil
- 15: Öffnungsquerschnitt Einlassventil
- 16: weiterer Zylinder
- 17: Freilauf (Überholkupplung)
- 18: Brennkraftmaschine
- 19: Hubkolbenexpansionsmaschine
- 20: Rahmenlängsträger
- 21: Lüfterrad

## Patentansprüche

1. Antriebseinheit mit einer Brennkraftmaschine (18), die mit einer Abtriebswelle in Wirkverbindung steht, und mit einer Hubkolbenexpansionsmaschine (19), die mit einer Kurbelwelle (8) in Wirkverbindung steht, wobei die Abtriebswelle über einen Freilauf (Überholkupplung) (17) mechanisch derart mit der Kurbelwelle (8) verbunden ist, dass eine Drehmomentübertragung von der Kurbelwelle (8) auf die Abtriebswelle erfolgt, **dadurch gekennzeichnet, dass** die Hubkolbenexpansionsmaschine (19) über wenigstens zwei Zylinder (1, 16) verfügt, in deren Innenraum (6) bei geschlossenem Einlassventil (2) zumindest zeitweise über ein parallel zum Einlassventil (2) angeordnetes Bypassventil (3) ein Fluid aus einer Fluidversorgung (9) einleitbar ist.

2. Antriebseinheit nach Anspruch 1, **dadurch gekennzeichnet, dass** der wenigstens eine Zylinder (1) der Hubkolbenexpansionsmaschine (19) über ein Auslassventil (4) verfügt, durch das das Fluid aus dem Innenraum (6) des Zylinders (1) in eine Fluidentsorgung (10) leitbar ist.

3. Antriebseinheit nach Anspruch 1 oder 2, **dadurch gekennzeichnet, dass** ein vom Bypassventil (3) freigebbarer Öffnungsquerschnitt (14) das 0,1-fache bis 0,5-fache eines vom Einlassventil (2) freigebbaren Öffnungsquerschnitts (15) beträgt.

4. Antriebseinheit nach Anspruch 2 oder nach Anspruch 3, wenn abhängig von Anspruch 2, **dadurch gekennzeichnet, dass** die Ventile (2, 3, 4) derart steuerbar sind, dass das Bypassventil (3) zumindest zeitweise geöffnet ist, wenn das Einlassventil (2) geschlossen ist.

5. Antriebseinheit nach einem der Ansprüche 2 bis 4, **dadurch gekennzeichnet, dass** die Ventile (2, 3, 4) derart steuerbar sind, dass das Bypassventil (3) zumindest zeitweise geöffnet ist, wenn das Einlass- (2) und das Auslassventil (4) geschlossen sind.

6. Antriebseinheit nach einem der Ansprüche 1 bis 4, **dadurch gekennzeichnet, dass** das Bypassventil (3) als federbelastetes Kugelventil ausgeführt ist.

7. Antriebseinheit nach einem der Ansprüche 1 bis 6, **dadurch gekennzeichnet, dass** das Einlass- (2) und das Bypassventil (3) an eine Fluidversorgung (9) mit einer Fördereinheit zur Versorgung der Zylinder (1, 16) mit einem dampf- und/ oder gasförmigen Fluid angeschlossen sind, und die Fördereinheit sowie ein Öffnungsquerschnitt (14) des Bypassventils (3) derart dimensioniert sind, dass ein Systemdruck in der Fluidversorgung (9) steigt, wenn das Einlassventil (2) geschlossen und das Bypassventil (3) geöffnet ist.

8. Antriebseinheit nach einem der Ansprüche 1 bis 7, **dadurch gekennzeichnet, dass** die Hubkolbenexpansionsmaschine (19) über eine ungerade Anzahl von Zylindern (1, 16) verfügt.

9. Antriebseinheit nach einem der Ansprüche 1 bis 8, **dadurch gekennzeichnet, dass** die Hubkolbenexpansionsmaschine (19) über fünf Zylinder (1, 16) verfügt.

10. Verfahren zum Betrieb einer Antriebseinheit, bei der eine Abtriebswelle einer Brennkraftmaschine (18) über einen Freilauf (17) mechanisch mit der Kurbelwelle (8) einer Hubkolbenexpansionsmaschine (19), die über wenigstens zwei Zylinder (1) verfügt, verbunden ist, wobei mittels Abwärme der Brennkraftmaschine (18) ein Fluid erwärmt und zumindest teilweise in eine dampf- und/oder gasförmige Phase überführt wird, das Fluid in zumindest teilweise dampf- und/oder gasförmigem Zustand über ein Einlassventil (2) in einen Innenraum des Zylinders eingeleitet wird und unter Entspannung des Fluids ein innerhalb des Zylinders (1) beweglich gelagerter und mechanisch an die Kurbelwelle (8) gekoppelter Kolben (5) in Bewegung gesetzt wird, **dadurch gekennzeichnet, dass** ein strömungstechnisch parallel zum Einlassventil (2) angeordnetes Bypassventil (3) bei geschlossenem Einlassventil (2) geöffnet und Fluid aus der Fluidversorgung in den Innenraum (6) des Zylinders (1) eingeleitet wird.

11. Verfahren nach Anspruch 10, **dadurch gekennzeichnet, dass** alle in der Hubkolbenexpansionsmaschine (19) vorgesehenen Bypassventile (3) geöffnet werden bevor ein Einlassventil (2) bewegt wird.

12. Verfahren nach Anspruch 10 oder 11, **dadurch gekennzeichnet, dass** das Bypassventil (3) in Abhängigkeit eines Systemdrucks in der Fluidversorgung (9) geöffnet wird.

13. Verfahren nach einem der Ansprüche 10 bis 12, **dadurch gekennzeichnet, dass** eine Bewegung des Einlassventils (2) durch eine Rotation der Kurbelwelle (8) bewirkt wird.

## Claims

1. Drive unit having an internal combustion engine (18), which is operatively connected to an output shaft, and having a reciprocating-piston expansion machine (19), which is operatively connected to a crankshaft (8), wherein the output shaft is mechanically connected by means of a freewheel (overrunning clutch) (17) to the crankshaft (8) such that a transmission of torque takes place from the crankshaft (8) to the output shaft, **characterized in that** the reciprocating-piston expansion machine (19) has at least two cylinders (1, 16), into the interior space (6) of which a fluid from a fluid supply (9) can be introduced at least temporarily, when the inlet valve (2) is in a closed state, via a bypass valve (3) arranged in parallel with respect to the inlet valve (2).

2. Drive unit according to Claim 1, **characterized in that** the at least one cylinder (1) of the reciprocating-piston expansion machine (19) has an outlet valve (4) through which the fluid can be conducted out of the interior space (6) of the cylinder (1) into a fluid discharge section (10).

3. Drive unit according to Claim 1 or 2, **characterized in that** an opening cross section (14) that can be opened up by the bypass valve (3) amounts to 0.1 times to 0.5 times an opening cross section (15) that can be opened up by the inlet valve (2).

4. Drive unit according to Claim 2 or according to Claim 3 where dependent on Claim 2, **characterized in that** the valves (2, 3, 4) are controllable such that the bypass valve (3) is at least temporarily open when the inlet valve (2) is in a closed state.

5. Drive unit according to one of Claims 2 to 4, **characterized in that** the valves (2, 3, 4) are controllable such that the bypass valve (3) is at least temporarily open when the inlet valve (2) and the outlet valve (4) are in a closed state.

6. Drive unit according to one of Claims 1 to 4, **characterized in that** the bypass valve (3) is designed as a spring-loaded ball valve.

7. Drive unit according to one of Claims 1 to 6, **characterized in that** the inlet valve (2) and the bypass valve (3) are connected to a fluid supply (9) with a delivery unit for supplying a vaporous and/or gaseous fluid to the cylinders (1, 16), and the delivery unit and an opening cross section (14) of the bypass valve (3) are dimensioned such that a system pressure in the fluid supply (9) increases when the inlet valve (2) is in a closed state and the bypass valve (3) is open.

8. Drive unit according to one of Claims 1 to 7, **characterized in that** the reciprocating-piston expansion machine (19) has an odd number of cylinders (1, 16).

9. Drive unit according to one of Claims 1 to 8, **characterized in that** the reciprocating-piston expansion machine (19) has five cylinders (1, 16).

10. Method for operating a drive unit in which an output shaft of an internal combustion engine (18) is mechanically connected by means of a freewheel (17) to the crankshaft (8) of a reciprocating-piston expansion machine (19) which has at least two cylinders (1), wherein a fluid is heated and at least partially changed into a vaporous and/or gaseous phase by means of waste heat of the internal combustion engine (18), the fluid in the at least partially vaporous and/or gaseous state is introduced via an inlet valve (2) into an interior space of the cylinder, and a piston (5) which is mounted movably within the cylinder (1) and which is mechanically coupled to the crankshaft (8) is set in motion by expansion of the fluid, **characterized in that** a bypass valve (3) which is arranged in parallel with respect to the inlet valve (2) in terms of flow is opened when the inlet valve (2) is in a closed state, and fluid is introduced from the fluid supply into the interior space (6) of the cylinder (1).

11. Method according to Claim 10, **characterized in that** all of the bypass valves (3) provided in the reciprocating-piston expansion machine (19) are opened before an inlet valve (2) is moved.

12. Method according to Claim 10 or 11, **characterized in that** the bypass valve (3) is opened in a manner dependent on a system pressure in the fluid supply (9) .

13. Method according to one of Claims 10 to 12, **characterized in that** a movement of the inlet valve (2) is effected by means of a rotation of the crankshaft (8).

## Revendications

1. Unité d'entraînement comprenant un moteur à combustion interne (18) qui est en liaison fonctionnelle avec un arbre de prise de force et comprenant une machine à expansion à piston alternatif (19) qui est en liaison fonctionnelle avec un vilebrequin (8), l'arbre de prise de force étant connecté mécaniquement au vilebrequin (8) par le biais d'une roue libre (embrayage à roue libre) (17) de telle sorte qu'il se produise un transfert de couple du vilebrequin (8) à l'arbre de prise de force, **caractérisée en ce que** la machine à expansion à piston alternatif (19) dispose d'au moins deux cylindres (1, 16) dans l'espace interne (6) desquels, lorsque la soupape d'admission (2) est fermée, un fluide provenant d'une alimentation en fluide (9) peut être introduit au moins temporairement par le biais d'une soupape de dérivation (3) disposée parallèlement à la soupape d'admission (2).

2. Unité d'entraînement selon la revendication 1, **caractérisée en ce que** l'au moins un cylindre (1) de la machine à expansion à piston alternatif (19) dispose d'une soupape de sortie (4) à travers laquelle le fluide provenant de l'espace interne (6) du cylindre (1) peut être conduit dans une évacuation de fluide (10).

3. Unité d'entraînement selon la revendication 1 ou 2, **caractérisée en ce qu'**une section transversale d'ouverture (14) pouvant être ouverte par une soupape de dérivation (3) représente 0,1 fois à 0,5 fois une section transversale d'ouverture (15) pouvant être ouverte par la soupape d'admission (2) .

4. Unité d'entraînement selon la revendication 2 ou selon la revendication 3 lorsqu'elle dépend de la revendication 2, **caractérisée en ce que** les soupapes (2, 3, 4) peuvent être commandées de telle sorte que la soupape de dérivation (3) soit ouverte au moins temporairement lorsque la soupape d'admission (2) est fermée.

5. Unité d'entraînement selon l'une quelconque des revendications 2 à 4, **caractérisée en ce que** les soupapes (2, 3, 4) peuvent être commandées de telle sorte que la soupape de dérivation (3) soit ouverte au moins temporairement lorsque la soupape d'admission (2) et la soupape de sortie (4) sont fermées.

6. Unité d'entraînement selon l'une quelconque des revendications 1 à 4, **caractérisée en ce que** la soupape de dérivation (3) est réalisée sous forme de soupape sphérique sollicitée par ressort.

7. Unité d'entraînement selon l'une quelconque des revendications 1 à 6, **caractérisée en ce que** la soupape d'admission (2) et la soupape de dérivation (3) sont raccordées sur une alimentation en fluide (9) à une unité de refoulement pour alimenter les cylindres (1, 16) en fluide sous forme de vapeur et/ou de gaz, et l'unité de refoulement ainsi qu'une section transversale d'ouverture (14) de la soupape de dérivation (3) sont dimensionnées de telle sorte qu'une pression de système dans l'alimentation en fluide (9) augmente lorsque la soupape d'admission (2) est fermée et que la soupape de dérivation (3) est ouverte.

8. Unité d'entraînement selon l'une quelconque des revendications 1 à 7, **caractérisée en ce que** la machine à expansion à piston alternatif (19) dispose d'un nombre impair de cylindres (1, 16).

9. Unité d'entraînement selon l'une quelconque des revendications 1 à 8, **caractérisée en ce que** la machine à expansion à piston alternatif (19) dispose de cinq cylindres (1, 16).

10. Procédé pour faire fonctionner une unité d'entraînement, dans laquelle un arbre de prise de force d'un moteur à combustion interne (18) est connecté mécaniquement par le biais d'une roue libre (17) au vilebrequin (8) d'une machine à expansion à piston alternatif (19) qui dispose d'au moins deux cylindres (1), un fluide étant chauffé par la chaleur perdue du moteur à combustion interne (18) et étant transféré au moins en partie dans une phase vapeur et/ou gazeuse, le fluide étant introduit à l'état au moins en partie sous forme de vapeur et/ou de gaz par le biais d'une soupape d'admission (2) dans un espace interne du cylindre et, par détente du fluide, un piston (5) supporté de manière déplaçable à l'intérieur du cylindre (1) et accouplé mécaniquement au vilebrequin (8) étant mis en mouvement, **caractérisé en ce qu'**une soupape de dérivation (3) disposée fluidiquement parallèlement à la soupape d'admission (2) est ouverte lorsque la soupape d'admission (2) est fermée et du fluide provenant de l'alimentation en fluide est introduit dans l'espace interne (6) du cylindre (1).

11. Procédé selon la revendication 10, **caractérisé en ce que** toutes les soupapes de dérivation (3) prévues dans la machine à expansion à piston alternatif (19) sont ouvertes avant qu'une soupape d'admission (2) ne soit déplacée.

12. Procédé selon la revendication 10 ou 11, **caractérisé en ce que** la soupape de dérivation (3) est ouverte en fonction d'une pression de système dans l'alimentation en fluide (9).

13. Procédé selon l'une quelconque des revendications 10 à 12, **caractérisé en ce qu'**un déplacement de la soupape d'admission (2) est provoqué par une rotation du vilebrequin (8).
